# EUROPÄISCHE PATENTSCHRIFT

(11) **EP 1 241 719 B1**
(45) Veröffentlichungstag und Bekanntmachung des Hinweises auf die Patenterteilung: **01.08.2007**
(21) Anmeldenummer: 02003484.9
(22) Anmeldetag: 15.02.2002
(51) Int. Cl.: H01M 2/20

(54) **Vorrichtung zum Kontaktieren von elektrischen Akkumulatoren**
Contacting device for electric accummulators
Dispositif de contact d'accumulateurs électriques

(30) Priorität: 17.03.2001 DE 10113128
(43) Veröffentlichungstag der Anmeldung: 18.09.2002
(73) Patentinhaber: VARTA Automotive Systems GmbH, 30419 Hannover (DE)
(72) Erfinder: Bechtold, Dieter, 61118 Bad Vilbel (DE); Wiegmann, Martin, 27246 Borstel (DE); Koy, Jürgen, 30449 Hannover (DE); Joswig, Ralf, 29690 Buchholz /Aller (DE); Langbein, Uwe, 99097 Erfurt (DE)
(74) Vertreter: Lins, Edgar

(56) Entgegenhaltungen:
- CH-A- 591 767
- DE-C- 494 929
- GB-A- 1 423 391
- US-A- 5 662 497

## Beschreibung

Gegenstand der Erfindung ist ein Akkumulator mit mindestens einem Kontakt- und Verbindungselement zur Kontaktierung des Akkumulators der einen aus dem Gehäuse herausragenden Anschlusspol hat, wobei das Kontakt- und Verbindungselement eine auf den Anschlusspol aufgeschobene metallische Hülse ist deren Innendurchmesser etwa dem Außendurchmesser des Anschlusspols entspricht.

Kontakt- und Verbindungselemente zum Anschluss an die Pole von galvanischen Elementen sind in den verschiedensten Ausführungsformen bekannt.

Beispielsweise ist dem Dokument EP 834 943 B1 eine Anordnung zur elektrischen Reihenschaltung von zylindrischen Zellen zu entnehmen, bei der ein Verbindungselement in Form eines Topfes verwendet wird, der den Boden einer ersten Zellen umfasst und mit dem unteren Rand dieser Zelle verschweißt ist, und der eine Öffnung in seinem Boden besitzt, durch die der Pol der zweiten Zelle hineinragt und die erste Zelle kontaktiert, wobei der Boden des Verbindungstopfes mit einer zweiten Zelle verschweißt ist. Eine solche Reihenschaltung ist durch die Verschweißung der Bauteile unlösbar und erfordert darüber hinaus hohen Aufwand bei der Montage.

Aus der Druckschrift US 5 521 021 sind galvanische Elemente bekannt, bei denen ein Pol als Gewindebolzen ausgebildet ist, während der andere Pol auf der Gegenseite des Elements als Gewindeöffnung ausgestaltet ist. Eine Reihenschaltung lässt sich so durch Verschrauben mehrerer Zellen herstellen. Allerdings sind solche als Gewindebolzen ausgebildeten Schraubpole bzw. mit Gewinde versehene Öffnungen in der Herstellung aufwendig.

Aus der Druckschrift DE 2359429 B2 ist ein Polanschluss in Form eines Steckverbinders zu entnehmen, der mit Federn und Kontaktlamellen versehen ist, die in einer Steckbuchse angeordnet sind. Die Kontaktlamellen sind durch Aussparungen oder Einschnitte in Kontaktelemente gebildet und aus der Ebene des Kontaktelementes herausgebogen und bestehen insbesondere aus gehärteter Berylliumbronze. Ein mit solchen federnden Kontaktlamellen versehener Steckverbinder ist aufgrund des Materials und der komplizierten Gestaltung außerordentlich aufwendig.

In der DE 494 929 ist eine Trockenbatterie mit mehreren hintereinander geschalteten Elementen beschrieben, bei der die Anschlusspole der Elemente durch Steck- oder Schraubverschlüsse ineinander eingreifen. Die Elektroden sind beispielsweise bajonettartig oder druckknopfartig miteinander verbunden oder miteinander verschraubt.

Aus der CH 591 767 ist eine Kontakt- und Verbindungsanordnung für Akkumulatoren bekannt, bei der eine Schraubhülse zur Schaffung eines Außengewindes auf den Anschlusspol einer Batterie aufgeschweißt wird. Die Schraubhülse wird anschließend in einen Gewindegang im Deckel einer angrenzenden Batterie eingeschraubt und durch Schraubverbindung auf eine Anlageplatte der Batterie zur Schaffung eines elektrischen Kontakts zwischen den Batterien gepresst.

Der Erfindung liegt die Aufgabe zugrunde, einen Akkumulator mit mindestens einem Kontakt- und Verbindungselement zum Kontaktieren des Akkumulators, der einen aus dem Gehäuse herausragenden Anschlusspol hat, anzugeben, der einfach und kostengünstig herstellbar ist, zuverlässig und ohne hohen Aufwand montierbar ist, und über den sich hohe Ströme übertragen lassen, da eine große Kontaktfläche vorhanden ist.

Diese Aufgabe wird erfindungsgemäß bei einem Akkumulator der eingangs genannten Art durch die Merkmale des kennzeichnenden Teils des Anspruchs 1 gelöst. In den Unteransprüchen sind vorteilhafte Ausgestaltungen der Erfindung angegeben.

Anwendung findet die Kontaktvorrichtung insbesondere bei alkalischen Akkumulatoren in Rundzellenform oder in rechteckiger Form und bei Lithium-Ionen Akkumulatoren in Rundzellenform oder in rechteckiger Form.

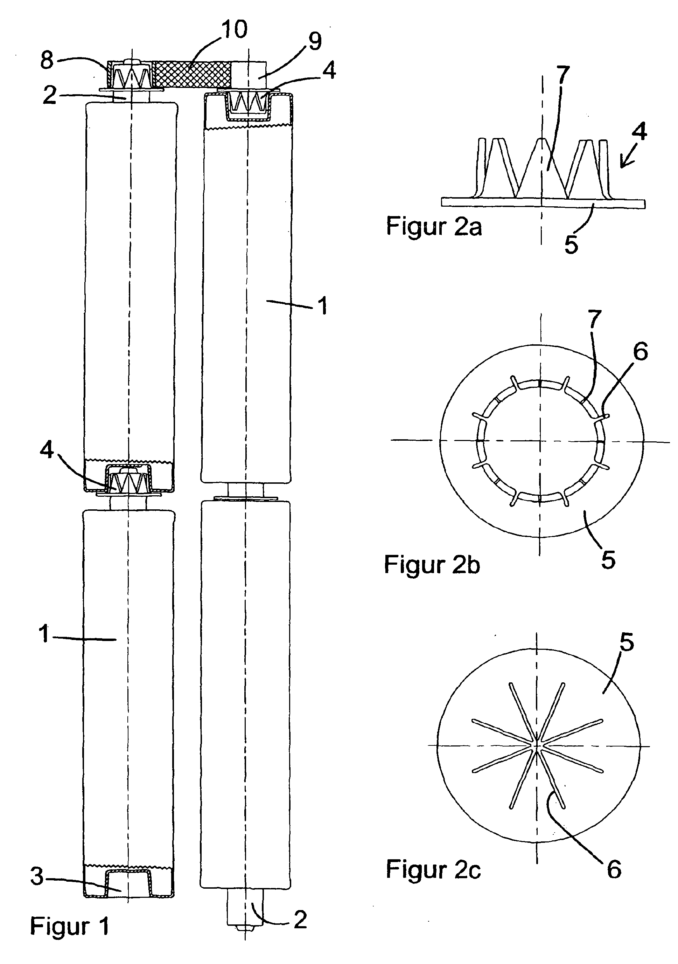

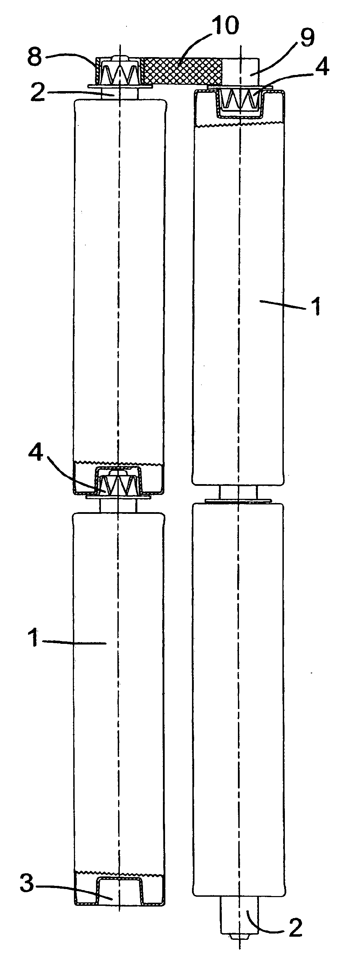

Im Folgenden ist der Gegenstand der Erfindung anhand der Figuren 1 bis 4 näher erläutert.

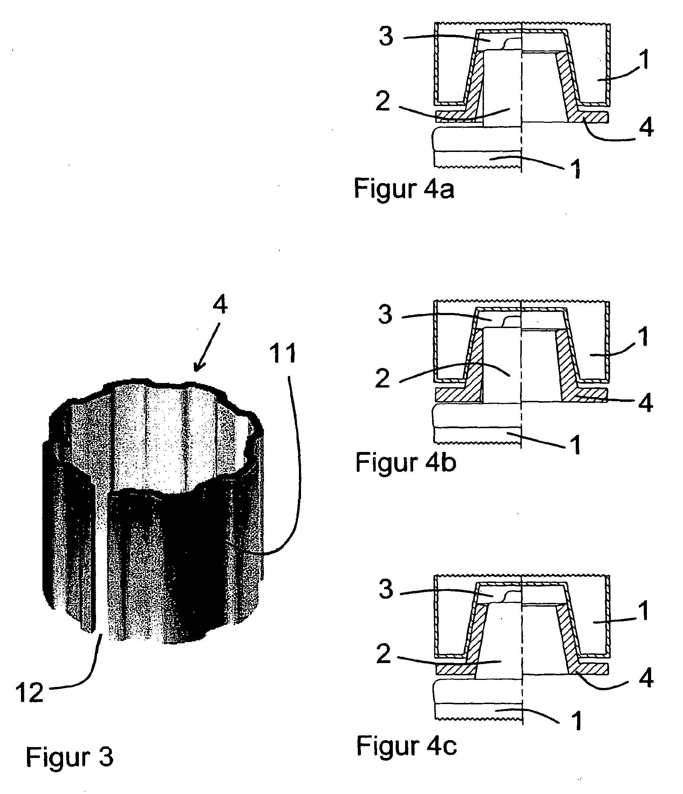

Figur 1 zeigt eine Reihenschaltung mehrerer galvanischer Elemente mit einer Kontaktanordnung. Die Figuren 2a, b und c zeigen ein Kontaktelement. Figur 3 zeigt eine weitere, besonders vorteilhafte Ausgestaltung des Kontaktelements. Figur 4 zeigt weitere Ausführungsformen der Kontakt- und Verbindungsanordnung.

Gemäß Figur 1 sind mehrere Akkumulatoren 1, beispielsweise alkalische Akkumulatoren in Rundzellenform, in Reihe geschaltet, Jede dieser Zellen besitzt einen Anschlusspol 2, der aus dem Zellengehäuse herausragt und auf der gegenüberliegenden Seite der Rundzelle eine Gehäuseöffnung 3. Diese Zellen sind durch das in Figur 2 näher dargestellte Verbindungselement 4 miteinander verbunden. Das Verbindungselement 4 ist aus einem Blechstreifen oder einer Metallronde 5 gemäß Figur 2c hergestellt, in welche sternförmige Schlitze 6 geschnitten sind. Durch diese Schlitze 6 werden etwa dreieckförmige Zungen 7 gebildet (Figur 2a), die nach oben gebogen sind und die in einem Kreis angeordnet sind. Der Innendurchmesser der durch die senkrecht stehenden dreieckförmigen Zungen 7 gebildeten Hülse entspricht dem Außendurchmesser des Anschlusspols 2. Dieses Verbindungselement 4 wird erfindungsgemäß auf den Anschlusspol 2 aufgeschoben. Als übergreifende Führung dient die Bodenöffnung 3 der in Reihe zu schaltenden zweiten Zelle, deren Innendurchmesser so gewählt ist, dass er etwa dem Außendurchmesser des Anschlusspols 2 plus der zweifachen Dicke des Materials der Ronde 5 entspricht. Durch Aufschieben einer Zelle auf den Anschlusspol 2 der nächsten Zelle wird das Verbindungselement 4 eng an den Anschlusspol 2 bzw. die Öffnung 3 im Boden der Zelle gepresst, und es entsteht ein großflächiger Kontakt, der die Übertragung hoher Ströme ermöglicht. Als Material für das Kontakt- und Verbindungselement 4 ist insbesondere Kupfer wegen seiner guten elektrischen Leitfähigkeit und seiner Verformungseigenschaften geeignet, während Anschlusspol 2 und Zellengehäuse beispielsweise aus vernickeltem Stahl bestehen.

Anstelle des Verbindungselements mit dreieckförmigen, aus einer Ronde herausgebogenen Zungen 7 gemäß Figur 2 kann grundsätzlich auch eine aus einem Kupfermaterial gezogene/gerollte Hülse dienen, die mit einem Längsschlitz versehen ist. Eine besonders vorteilhafte Form einer solchen Hülse ist in Figur 3 dargestellt. Diese Hülse besteht aus einem gewellten Material 11, welches mit einem Längsschlitz 12 versehen ist.

Die Wellenberge dieses Materials sind so abgeplattet, dass sie einerseits der Außenkontur des Anschlusspols 2, andererseits der Innenkontur der Öffnung 3 im Zellenunterteil entsprechen. Diese Hülse 11 ist besonders einfach herstellbar, ermöglicht eine schnelle und zuverlässige Montage und ergibt eine sehr große Kontaktfläche, die die Übertragung hoher Ströme erlaubt.

Figur 4 zeigt weitere mögliche Ausgestaltungen von Verbindungselement 4 und Kontaktanordnung an der Zelle.

Gemäß Figur 4a besitzt der Akkumulator 1 einen zylindrischen Anschlusspol 2, während die untere Zellenausnehmung 3 eine konische Form besitz, beispielsweise mit einem Kegel von 1 : 20 bei einem maximalen Durchmesser von beispielsweise 15mm. Ein Kegel mit dieser geringen Steigung führt zu einer Selbsthemmung. Wenn das Anschluss- und Verbindungselement 4 eine Form wie in Figur 2 besitzt, werden die dreieckförmigen Zungen 7 in einem Winkel von weniger als 90° nach oben gebogen, so dass sich einen kegelförmige Ausgestaltung des Kontaktelements ergibt.

Gemäß Figur 4b sind Anschlusspol 2 und Zellenausnehmung 3 wie bei Figur 4a ausgestaltet. Geändert ist die eigentliche Kontur des Kontakt- und Verbindungselements 4, welches so ausgestaltet ist, dass seine Wandflächen verjüngt ausgebildet sind. Dieses erleichtert insbesondere den Zusammenbau und vergrößert die der Stromabteilung zur Verfügung stehende Kontaktfläche.

Gemäß Figur 4c weist sowohl der obere Anschlusspol 2 als auch die Zellenausnehmung 3 eine kegelige Form auf. Das Anschluss- und Verbindungselement 4 besitzt dabei eine gleichbleibende Dicke.

Um Reihen- oder Parallelschaltungen elektrischer Akkumulatoren mit Kontakt- und Verbindungselementen herzustellen, ist es selbstverständlich auch möglich, wie in Figur 1 dargestellt, das Kontaktelement 4 auf den Anschlusspol 2 einer ersten Zelle aufzusetzen und dieses durch einen Führungsring 8 auf den Anschlusspol 2 auszupressen. Dieser Führungsring 8 ist wiederum elektrisch mit einem der Form des Anschlusspols 2 entsprechenden Bolzen 9 verbunden, welcher in die Ausnehmung 3 im Boden der zu verbindenden Zelle unter Zwischenlage eines erfindungsgemäßen Kontakt- und Verbindungselements 4 eingefügt ist. Zur elektrischen Verbindung zwischen Bolzen und Kontaktelement dient beispielsweise eine damit verschweißte Kupferflachschlitze 10.

Das Kontakt- und Verbindungselement 4 ermöglicht eine einfache, aber hoch zuverlässige Verbindung zwischen galvanischen Elementen zu schaffen, die insbesondere dazu geeignet ist, hohe Ströme zu übertragen.

## Patentansprüche

1. Akkumulator mit mindestens einem Kontakt- und Verbindungselement (4) zum Kontaktieren des Akkumulators, der einen aus dem Gehäuse herausragenden Anschlusspol (2) hat, wobei das Kontakt- und Verbindungselement (4) eine auf den Anschlusspol (2) aufgeschobene metallische Hülse ist, deren Innendurchmesser etwa dem Außendurchmesser des Anschlusspols (2) entspricht, **dadurch gekennzeichnet, dass** die Hülse mindestens einen Schlitz (6, 12) aufweist und mittels einer übergreifenden Führung (3, 8) in enger Pressung auf den Anschlusspol (2) aufgepresst ist.

2. Akkumulator nach Anspruch 1, **dadurch gekennzeichnet, dass** die Hülse (4) einen in Richtung der Achse des Anschlusspols verlaufenden Schlitz (12) besitzt.

3. Akkumulator nach Anspruch 1 oder 2, **dadurch gekennzeichnet, dass** die Hülse aus gewelltem Material (11) besteht.

4. Akkumulator nach Anspruch 3, **dadurch gekennzeichnet, dass** die Wellenberge des Materials (11) abgeplattet sind.

5. Akkumulator nach einem oder mehreren der Ansprüche 1 bis 3, **dadurch gekennzeichnet, dass** das Kontakt- und Verbindungselement (4) aus einer Blechronde (5) besteht, aus der etwa dreieckförmigen Zungen (7), die auf einen Kreis angeordnet sind, ausgebogen sind, wobei der Kreisdurchmesser etwa dem Außendurchmesser des Anschlusspols (2) entspricht und die dreieckförmigen Zungen (7) senkrecht zur Grundfläche der Blechronde (5) stehen.

6. Akkumulator nach Anspruch 5, **dadurch gekennzeichnet, dass** die dreieckförmigen Zungen (7) in einem Winkel von < 90° zur Grundfläche der Blechronde (5) stehen und eine im wesentlichen kegelförmige Öffnung bilden.

7. Akkumulator nach einem oder mehreren der Ansprüche 1 bis 6, **dadurch gekennzeichnet, dass** das Verbindungs- und Kontaktelement (4) mittels eines übergreifenden Führungsrings (8) auf den Anschlusspol (2) gepresst ist.

8. Reihenschaltung elektrischer Akkumulatoren nach einem der Ansprüche 1 bis 7, die durch ein Kontakt- oder Verbindungselement verbunden sind, **dadurch gekennzeichnet, dass** der mit dem Kontaktelement (4) versehene Anschlusspol (2) einer ersten Zelle in die eine Führung bildende Öffnung (3) im Zellenboden der nächsten Zelle eingesetzt ist.

9. Reihen- und/oder Parallelschaltung elektrischer Akkumulatoren nach einem der Ansprüche 1 bis 7, die durch Verbindungs- und Kontaktelemente verbunden sind, **dadurch gekennzeichnet, dass** das Kontaktelement (4) auf den Anschlusspol (2) einer ersten Zelle aufgesetzt und durch einen Führungsring (8) aufgepresst ist und der Führungsring (8) elektrisch und mechanisch mit einem Bolzen (9) in Verbindung steht, wobei der Bolzen (9) unter Verwendung eines weiteren Kontaktelements (4) in die Bodenöffnung (3) einer zweiten Akkumulatorenzelle eingepresst ist.

## Claims

1. Rechargeable battery having at least one contact and connection element (4) for making contact with the rechargeable battery, which has a connecting pole (2) which projects out of the housing, with the contact and connection element (4) being a metallic sleeve which is pushed onto the connecting pole (2) and whose internal diameter corresponds approximately to the external diameter of the connecting pole (2), **characterized in that** the sleeve has at least one slot (6, 12) and is pressed onto the connecting pole (2) by means of a guide (3, 8) which clasps it, with a tight fit.

2. Rechargeable battery according to Claim 1, **characterized in that** the sleeve (4) has a slot (12) which runs in the direction of the axis of the connecting pole.

3. Rechargeable battery according to Claim 1 or 2, **characterized in that** the sleeve is composed of corrugated material (11).

4. Rechargeable battery according to Claim 3, **characterized in that** the corrugation peaks of the material (11) are flattened.

5. Rechargeable battery according to one or more of Claims 1 to 3, **characterized in that** the contact and connection element (4) comprises a sheet-metal disc (5) from which approximately triangular tongues (7), which are arranged on a circle, are bent out, with the circle diameter corresponding approximately to the external diameter of the connecting pole (2) and with the triangular tongues (7) being at right angles to the base area of the sheet-metal disc (5).

6. Rechargeable battery according to Claim 5, **characterized in that** the triangular tongues (7) are at an angle of < 90° to the base area of the sheet-metal disc (5), and form an essentially conical opening.

7. Rechargeable battery according to one or more of Claims 1 to 6, **characterized in that** the connection and contact element (4) is pressed onto the connecting pole (2) by means of a clasping guide ring (8).

8. Series connection of electrical rechargeable batteries according to one of Claims 1 to 7, which are connected by means of a contact or connection element, **characterized in that** the connecting pole (2) which is provided with the contact element (4) in a first cell is inserted into the opening (3), which forms a guide, in the cell base of the next cell.

9. Series and/or parallel connection of electrical rechargeable batteries according to one of Claims 1 to 7, which are connected by means of connection and contact elements, **characterized in that** the contact element (4) is fitted to the connecting pole (2) of a first cell and is pressed on by a guide ring (8), and the guide ring (8) is electrically and mechanically connected to a bolt (9), with the bolt (9) being pressed into the base opening (3) of a second rechargeable-battery cell, using a further contact element (4).

## Revendications

1. Accumulateur avec au moins un élément de contact et de liaison (4) pour mettre en contact un accumulateur possédant un pôle de raccordement (2) dépassant du boîtier, l'élément de contact et de liaison (4) étant une douille métallique poussée sur le pôle de raccordement (2) et dont le diamètre interne correspond sensiblement au diamètre externe du pôle de raccordement (2),
**caractérisé en ce que**
la douille présente au moins une fente (6, 12), et est appliquée en pression étroite sur le pôle (2) par un guidage (3, 8) en prise sur celui-ci.

2. Accumulateur selon la revendication 1,
**caractérisé en ce que**
la douille (4) présente une fente (12) parallèle à l'axe du pôle de raccordement.

3. Accumulateur selon la revendication 1 ou 2,
**caractérisé en ce que**
la douille est faite d'un matériau (11) ondulé.

4. Accumulateur selon la revendication 3,
**caractérisé en ce que**
les sommets des ondes du matériau (11) sont aplatis.

5. Accumulateur selon l'une ou plusieurs des revendications 1 à 3,
**caractérisé en ce que**
l'élément de liaison et de contact (4) est constitué par une rondelle de tôle (5) dans laquelle des languettes (7) à peu près triangulaires ont été relevées par pliage le long d'un cercle dont le diamètre correspond à peu près à celui du pôle de raccordement (2), les languettes triangulaires (7) étant perpendiculaires à la surface de base de la rondelle de tôle (5).

6. Accumulateur selon la revendication 5,
**caractérisé en ce que**
les languettes triangulaires (7) font un angle inférieur à 90° avec la surface de base de la rondelle de tôle (5) et forment une ouverture essentiellement conique.

7. Accumulateur selon l'une quelconque des revendications 1 à 6,
**caractérisé en ce que**
l'élément de liaison et de contact (4) est appliqué sur le pôle de raccordement (2) par une bague de guidage (8) montée en prise sur cet élément.

8. Montage en série d'accumulateurs électriques selon l'une quelconque des revendications 1 à 7, reliés par un élément de liaison et de contact
**caractérisé en ce que**
le pôle de raccordement (2) appartenant à une première cellule et équipé de l'élément de contact (4) est engagé dans une ouverture (3) formant guidage, au fond de la cellule suivante.

9. Montage en série ou en parallèle d'accumulateurs électriques selon l'une des revendications 1 à 7, reliés par des éléments de contact et de liaison,
**caractérisé en ce que**
l'élément de contact (4) est monté sur le pôle de raccordement (2) d'une première cellule et mis en pression par une bague de guidage (8) qui est en liaison électrique et mécanique avec une tige (9), et par utilisation d'un autre élément de contact (4) la tige (9) est engagée avec pression dans l'ouverture (3) au fond d'une deuxième cellule d'accumulateur.
